Europäisches Patentamt

European Patent Office

Office européen des brevets

(19)

(11) Veröffentlichungsnummer: **0 298 278 B1**

# EUROPÄISCHE PATENTSCHRIFT

(12)

(45) Veröffentlichungstag der Patentschrift: **18.03.92**

(51) Int. Cl.5: **H02P 7/62**, H02K 7/14, B23B 45/02

(21) Anmeldenummer: **88109404.9**

(22) Anmeldetag: **14.06.88**

(54) **Stromversorgungseinrichtung mit wenigstens einem über ein Verbindungskabel daran anschliessbaren Elektrowerkzeug.**

(30) Priorität: **04.07.87 DE 3722177**

(43) Veröffentlichungstag der Anmeldung:
**11.01.89 Patentblatt 89/02**

(45) Bekanntmachung des Hinweises auf die
Patenterteilung:
**18.03.92 Patentblatt 92/12**

(84) Benannte Vertragsstaaten:
**AT BE CH ES FR GB GR IT LI LU NL SE**

(56) Entgegenhaltungen:
CH-A- 459 336            US-A- 3 564 372
US-A- 3 956 688          US-A- 4 430 681
US-A- 4 489 261          US-A- 4 650 375

(73) Patentinhaber: **Festo KG
Ruiter Strasse 82
W-7300 Esslingen 1(DE)**

(72) Erfinder: **Fetzer, Gerhard, Dipl.-Ing.
Mühlhaldenstrasse 25
W-7306 Denkendorf(DE)**
Erfinder: **Behrens, Axel, Dipl.-Ing.
Uhlandstrasse 44
W-7306 Denkendorf(DE)**

(74) Vertreter: **Vetter, Hans, Dipl.-Phys. Dr. et al
Patentanwalte Dipl.-Ing. Rudolf Magenbauer
Dipl.-Phys. Dr. Otto Reimold Dipl.-Phys. Dr.
Hans Vetter Hölderlinweg 58
W-7300 Esslingen(DE)**

EP 0 298 278 B1

## Beschreibung

Die Erfindung betrifft eine Stromversorgungseinrichtung gemäß dem Oberbegriff des Anspruches 1.

Bekannte Elektrowerkzeuge sind oft mit elektronischen Steuervorrichtungen, beispielsweise zur Steuerung der Drehzahl, versehen, die im Gehäuse des Elektrowerkzeugs integriert sind. Als Bedienungselemente sind dabei ein Betriebsschalter und ein Einstelldrehknopf für die Drehzahl vorgesehen, oder die stufenlose Betätigung des Betriebsschalters dient zur Steuerung der Drehzahl.

Weiterhin ist es bekannt, insbesondere für drehstromgetriebene Elektrowerkzeuge eine getrennte Stromversorgungseinrichtung vorzusehen, in der zur drehzahlabhängigen Steuerung des Elektrowerkzeugs ein Drehstrom mit einer variablen Frequenz von beispielsweise 0 - 400 Hz erzeugt wird. Das Elektrowerkzeug wird über ein Verbindungskabel an diese Stromversorgungseinrichtung angeschlossen. Derartige Anordnungen der eingangs genannten Gattung sind beispielsweise aus der DE-OS 32 47 046 oder aus der älteren DE-OS 37 09 983 bekannt. Die Drehzahl kann dort mittels eines Potentiometers an der Stromversorgungseinrichtung eingestellt werden, während ein Betriebsschalter am Elektrowerkzeug dort ein Ein- und Ausschalten über einen Stromunterbrechungsschalter ermöglicht.

Aus CH-A-459 336 ist ein mit einer Stromversorgungseinrichtung über ein Verbindungskabel verbundenes Elektrowerkzeug bekannt, wobei ein Ein/Aus-Schalter und ein Vorwärts/Rückwärtsschalter im Werkzeuggehäuse untergebracht sind. Die entsprechenden Schaltvorgänge können über Steuerleitungen zur Stromversorgungseinrichtung dort ausgelöst werden.

Auch aus US-A-3 564 372 ist eine Anordnung bekannt, bei der ein Ein/Aus-Schalter im Werkzeuggehäuse untergebracht ist und über Steuerleitungen auf eine separate, über ein Verbindungskabel mit dem Elektrowerkzeug verbundene Stromversorgungseinrichtung einwirkt. Darüber hinaus enthält die Stromversorgungseinrichtung eine Drehzahlsteuervorrichtung.

Die Einstellung der Drehzahl an der Stromversorgungseinrichtung erweist sich beim Betrieb des Elektrowerkzeugs als nachteilig, da oftmals während der Bearbeitung eines Werkstücks die Drehzahl oder andere Betriebsparameter des Elektrowerkzeugs verändert werden müssen. Darüber hinaus sind an eine derartige Stromversorgungseinrichtung eine Vielzahl verschiedener Elektrowerkzeuge anschließbar, die mit unterschiedlichen Drehzahlen, insbesondere unterschiedlichen Grenzdrehzahlen und in Abhängigkeit unterschiedlicher Parameter oder Einflußgrößen betrieben werden sollen. Durch die Drehzahleinstellung an der Stromversorgungseinrichtung werden maschinenspezifische Eigenarten des jeweiligen Elektrowerkzeugs nicht berücksichtigt. So können beispielsweise keine unterschiedlichen Grenzwerte von Drehzahl, Temperatur, Drehmoment, Spannung und Strom vorgegeben werden, so daß hierzu im Elektrowerkzeug eine gesonderte Überwachungselektronik vorgesehen werden müßte, die eine gesonderte Stromversorgung erforderlich machen würde. Dies ist jedoch aufwendig, umständlich und teuer.

Eine Aufgabe der Erfindung besteht daher darin, eine Stromversorgungseinrichtung mit anschließbarem Elektrowerkzeug der eingangs genannten Gattung zu schaffen, bei dem Steuer-, Regel- und/oder Überwachungsfunktionen von der Stromversorgungseinrichtung ausgeführt werden, die jedoch vom Elektrowerkzeug aus gesteuert oder initiiert werden können.

Diese Aufgabe wird erfindungsgemäß durch die kennzeichnenden Merkmale des Anspruches 1 gelöst.

Insbesondere bei drehstromgesteuerten Elektrowerkzeugen hat dies den Vorteil, daß die erforderliche teure, aufwendige und voluminöse elektronische Steuervorrichtung zur Steuerung der Drehzahl oder anderer Betriebsparameter zentral in der Stromversorgungseinrichtung angeordnet bleiben kann und dennoch zur individuellen Steuerung einer Vielzahl verschiedener Elektrowerkzeuge dienen kann. Die individuelle Steuerung der zentral angeordneten elektronischen Steuervorrichtung erfolgt jeweils vom angeschlossenen Elektrowerkzeug aus, wobei individuelle Grenzwerte, Steuer- und Überwachungsfunktionen von dort aus auf die elektronische Steuervorrichtung einwirken können. Es wird daher eine Fernbedienung und Fernüberwachung des Elektrowerkzeugs über die Stromversorgungseinrichtung erzielt.

Durch die in den Unteransprüchen aufgeführten Maßnahmen sind vorteilhafte Weiterbildungen und Verbesserungen der im Anspruch 1 angegebenen Stromversorgungseinrichtung möglich.

Als Bedienungselemente sind am Elektrowerkzeug ein Betriebsschalter und ein vorzugsweise als Potentiometer ausgebildeter Drehzahlsteller vorgesehen, wobei insbesondere durch stufenlose Betätigung des Betriebsschalters eine entsprechende Verstellung des Potentiometers erfolgt. Weitere Schalter und Potentiometer zur Steuerung weiterer Parameter oder Einflußgrößen können zusätzlich vorgesehen sein.

Zur Überwachung des Elektrowerkzeugs ist in diesem zweckmäßigerweise ein auf die elektronische Steuervorrichtung einwirkendes Überwachungsglied vorgesehen, das als Temperaturmeßglied (z. B. als PTC-Widerstand) als Spannungs-, Strom-, Drehmoment- und/oder Drehzahlmeßglied ausgebildet sein kann, um entsprechende Grenzwerte dieser Größen überwachen zu können und bei Überschreitung eine Drehzahlabsenkung steuern zu können.

In vorteilhafter Weise sind die Bedienungselemente und/oder Überwachungsglieder als Widerstandsnetzwerk ausgebildet, das über zwei Steuerleitungen mit der elektronischen Steuervorrichtung verbunden ist. Auf diese Weise kann eine vielseitige Bedienung und Überwachung über nur zwei Steuerleitungen erfolgen. Selbstverständlich ist es auch möglich, zusätzliche Steuerleitungen vorzusehen, wenn voneinander entkoppelte Funktionen vorgesehen sein sollen.

Im einfachsten Falle ist das Widerstandsnetzwerk als Reihenschaltung ausgebildet, das beispielsweise einen PTC-Widerstand zur Temperaturüberwachung, ein Drehzahlpotentiometer zur Drehzahlsteuerung und den Betriebsschalter aufweist. Die Übertragung der gewünschten Überwachungs- und Steuerinformation erfolgt dabei zweckmäßigerweise über eine Masseleitung und eine weitere Steuerleitung, die zur Bildung einer widerstandsabhängigen Steuerspannung und damit einer funktionsabhängigen Steuerspannung in der Stromversorgungseinrichtung mit einer Stromquelle verbunden ist. Auf diese Weise kann durch ein passives Widerstandsnetzwerk im Elektrowerkzeug eine funktionsabhängige Steuerspannung in der elektronischen Steuervorrichtung bewirkt werden.

Um eine minimale Drehzahl bei geschlossenem Betriebsschalter in jedem Falle aufrechtzuerhalten, ist das Widerstandsnetzwerk mit Ausnahme des in Reihe dazu geschalteten Betriebsschalters durch eine Z-Diode überbrückt.

Die Steuerspannung oder die erfaßten Widerstandswerte sind Steuerbereichen zugeordnet, wobei wenigstens ein Proportional-Drehzahlbereich und ab einem Grenzwert ein Abschaltbereich vorgesehen sind. Die Art der linearen oder nichtlinearen Proportionalität kann dabei durch das invididuelle Potentiometer im jeweiligen Elektrowerkzeug vorgegeben werden, so daß trotz einheitlicher Stromversorgungseinrichtung eine individuelle Steuerung des jeweiligen Elektrowerkzeugs von diesem aus möglich ist. Neben der Festlegung eines individuellen Minimal-Drehzahlgrenzwerts durch eine entsprechende Z-Diode kann vorzugsweise auch ein weiterer, den Proportional-Drehzahlbereich auf der dem ersten Grenzwert gegenüberliegenden Seite begrenzender Grenzwert vorgesehen sein, ab dem sich ein Bereich konstanter maximaler Drehzahl anschließt.

Ein Ausführungsbeispiel der Erfindung ist in der Zeichnung dargestellt und in der nachfolgenden Beschreibung näher erläutert. Es zeigen:

Fig. 1    ein mit einer Stromversorgungseinrichtung über ein Verbindungskabel verbundenes Elektrowerkzeug,

Fig. 2    eine schematische, schaltungsmäßige Darstellung der in Fig. 1 dargestellten Anordnung und

Fig. 3    ein Signaldiagramm zur Erläuterung der Wirkungsweise.

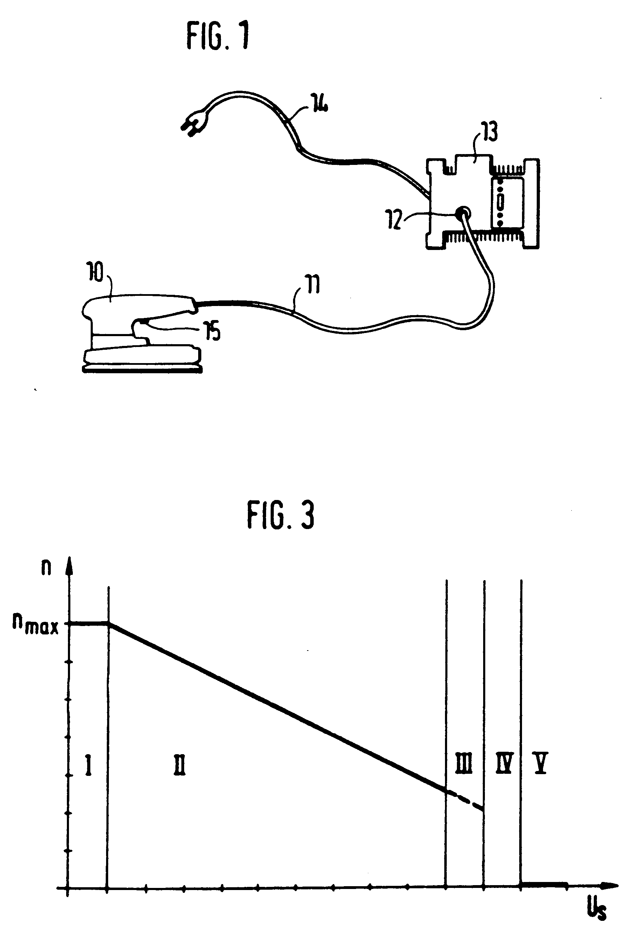

Bei dem in Fig. 1 dargestellten Ausführungsbeispiel ist ein als Handschleifgerät ausgebildetes Elektrowerkzeug 10 über ein Verbindungskabel 11 und eine Steckverbindung 12 mit einer Stromversorgungseinrichtung 13 verbunden, die ihrerseits über ein Netzkabel 14 an das Wechselstromnetz anschließbar ist. In der Stromversorgungseinrichtung 13 wird aus der Netzspannung eine Drehspannung mit veränderbarer Frequenz erzeugt, um einen Drehstrommotor im Elektrowerkzeug 10 mit variabler Drehzahl betreiben zu können. Derartige Vorrichtungen zum Betrieb von Elektrowerkzeugen mit Drehstrommotor sind aus dem eingangs angegebenen Stand der Technik bekannt und dienen dazu, Elektrowerkzeuge mit geringerem Gewicht und geringerer Baugröße oder größerer Leistung bei gleicher Baugröße zu erzielen. Dabei ergibt sich zusätzlich ein günstigeres Betriebsverhalten.

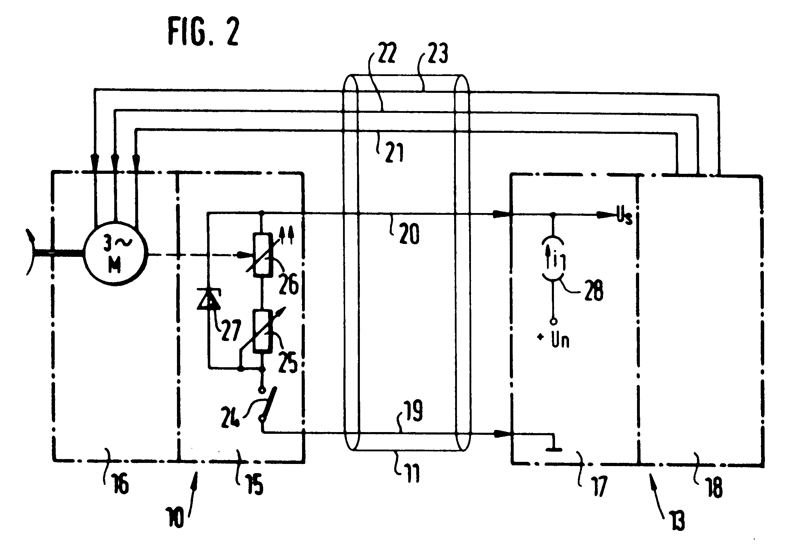

Beim Betrieb einer Vielzahl gleicher oder verschiedener Elektrowerkzeuge ist nur eine einzige Stromversorgungseinrichtung 13 erforderlich, über die dann jeweils das benötigte Elektrowerkzeug über das zugeordnete Verbindungskabel angeschlossen wird. Das Ein- und Ausschalten des Elektrowerkzeugs 10 sowie dessen Drehzahleinstellung erfolgt über ein Bedienungselement 15 am Elektrowerkzeug 10, das gleichzeitig als Betriebsschalter und durch stufenlose Betätigung zur Drehzahlsteuerung dienen kann. Selbstverständlich können auch voneinander getrennte Bedienungselemente vorgesehen sein, wobei noch zusätzliche Funktionen realisiert werden können. Das Bedienungselement 15 bzw. die weiteren Bedienungselemente wirken über das Verbindungskabel 11 auf die Stromversorgungseinrichtung 13 ein und bewirken dort eine Veränderung der Frequenz und/oder Amplitude der dem Elektrowerkzeug 10 ebenfalls über das Verbindungskabel 11 zugeführten Betriebsspannung, wie dies im Zusammenhang mit Fig. 2 näher erläutert wird.

Das in Fig. 2 schematisch dargestellte Elektrowerkzeug 10 besteht elektrisch gesehen im wesentlichen aus dem Bedienungselement 15 und einem Drehstrommotor 16, der vorzugsweise als Asynchronmotor ausgebildet ist. Die schematisch dargestellte Stromversorgungseinrichtung 13 besteht im wesentlichen aus einer elektronischen Steuervorrichtung 17 und einem elektronischen Leistungsteil 18. Im Verbindungskabel 11 sind fünf Leitungen angeordnet, nämlich zwei Steuerleitungen 19, 20 sowie drei Betriebsstromleitungen 21 - 23 zur Drehstromversorgung des Drehstrommotors 16 vom Leistungsteil 18 aus. Auf die Darstellung der Steckverbindung 12 wurde zur zeichnerischen Vereinfachung verzichtet.

Gemäß dem eingangs angegebenen Stand der Technik enthält die elektronische Steuervorrichtung 17 zusammen mit dem Leistungsteil 18 einen Umrichter zur Umwandlung der Netzwechselspannung in eine Drehspannung mit einstellbarer, variabler Frequenz und Amplitude, wobei die Einstellung prinzipiell über ein Potentiometer erfolgt.

Im Bedienungselement 15 ist die Reihenschaltung eines Betriebsschalters 24 mit einem als Potentiometer ausgebildeten Drehzahlsteller 25 und einem PTC-Widerstand 26 vorgesehen, wobei der Drehzahlsteller 25 und der PTC-Wider stand 26 durch eine Z-Diode 27 überbrückt sind. Die äußeren Anschlüsse der Reihenschaltung sind auf seiten des Betriebsschalters 24 über die Steuerleitung 19 in der elektronischen Steuervorrichtung 17 mit Masse und auf seiten des PTC-Widerstandes 26 über die Steuerleitung 20 in der elektronischen Steuervorrichtung 17 mit einer Stromquelle 28 verbunden, die von einer Hilfsspannung $U_h$ versorgt wird. Am Verknüpfungspunkt der Stromquelle 28 mit der Steuerleitung 20 liegt die Steuerspannung $U_s$ für den Umrichter bzw. die Einstellung der Frequenz und/oder der Amplitude des Drehstroms zur Versorgung des Drehstrommotors 16 an.

Die Wirkungsweise der dargestellten Anordnung soll im folgenden anhand des in Fig. 3 dargestellten Signaldiagramms erläutert werden. Bei geschlossenem Betriebsschalter 24, also eingeschaltetem Elektrowerkzeug 10, kann die Steuerspannung $U_s$ über den Drehzahlsteller 25 durch Veränderung der Potentiometerstellung vorgegeben werden. Der PTC-Widerstand 26 ist mit dem Drehstrommotor 16 wärmeleitend verbunden, und es wird zunächst davon ausgegangen, daß dieser im Normalbetrieb eine so geringe Temperatur aufweist, daß der Widerstandswert des PTC-Widerstands vernachlässigbar klein ist. Durch Verringerung des Widerstandswerts des Drehzahlstellers 25 verringert sich die Steuerspannung $U_s$, wodurch sich die Drehzahl n erhöht (siehe Bereich II). Eine Maximal-Drehzahlbegrenzung kann zum einen dadurch erfolgen, daß ein Restwiderstand bestehen bleibt, der durch den PTC-Widerstand und/oder den Drehzahlsteller und/oder einen zusätzlichen Widerstand bewirkt wird, oder unterhalb einer festlegbaren Steuerspannung erfolgt kein weiterer Drehzahlanstieg (siehe Bereich 1). Durch die Wahl des Restwiderstandes und die Widerstandscharakteristik und den Widerstandswert des Drehzahlstellers 25 kann eine an das jeweilige Elektrowerkzeug individuell angepaßte Drehzahlsteuerung erfolgen, wobei die Stromversorgungseinrichtung 13 unverändert bleiben kann. Erhitzt sich der Drehstrommotor 16 auf unzulässig hohe Werte, so steigt der Widerstandswert des PTC-Widerstands 26 an, wodurch sich die Steuerspannung $U_s$ bis in den Bereich III hinein erhöhen kann. Die Drehzahl des Drehstrommotors 16 wird dadurch auf geringe Werte abgesenkt, so daß der PTC-Widerstand 26 als Überhitzungsschutz dient. Diese Drehzahlabsenkung kann sich jedoch nicht in den Bereich IV fortsetzen, da ein entsprechender Spannungsanstieg der Steuerspannung $U_s$ durch die Z-Diode 27 begrenzt wird. Diese Z-Diode 27 dient daher zur Aufrechterhaltung einer minimalen Drehzahl, bei der sich der Drehstrommotor 16 beispielsweise durch sein eigenes Gebläse wieder abkühlen kann.

Beim Öffnen des Betriebsschalters 24 steigt die Hilfsspannung $U_s$ auf den Wert der Hilfsspannung $U_h$ an und liegt im Bereich V, in dem ein Schnellstopp des Drehstrommotors 16, beispielsweise durch einen Bremswiderstand, bewirkt wird. Der Bereich IV dient als Sicherheits-Störabstand, um Störungen und Toleranzen auszugleichen. Beim Schließen des Betriebsschalters 24 kann ein ruckfreier Hochlauf erfolgen.

Zusätzliche Steuer- und Überwachungsfunktionen können durch zusätzliche Widerstände realisiert werden, die zusammen ein erweitertes Widerstandsnetzwerk bilden, so kann beispielsweise noch ein Drehmoment über einen Drehmomentsteller vorgegeben werden, oder weitere Überwachungsglieder zur Überwachung der Spannung, des Stroms, des Drehmoments und/oder der Drehzahl können in das Widerstandsnetzwerk eingebaut sein oder weitere Widerstandsnetzwerke bilden, wobei dann allerdings jedes zusätzliche Widerstandsnetzwerk eine zusätzliche Steuerleitung erforderlich macht. Beispielsweise kann auch eine Drehrichtungssteuerung bei rotierenden Elektrowerkzeugen erfolgen.

Die Einwirkung der Steuerfunktionen und Überwachungsfunktionen auf das oder die Widerstandsnetzwerke kann beispielsweise auch über optoelektronische Glieder erfolgen, um eine elektrische Entkoppelung zu erreichen.

Die Steuer- und Überwachungselemente können beispielsweise auch nichtlineare Elemente sein, um bestimmte, nichtlineare Funktionsabläufe zu erreichen. Auch hier kann die individuelle Auslegung des Bedienungselements eines bestimmten Elektrowerkzeugs an dieses angepaßte Bedien- und Überwachungsfunktionen erzeugen, obgleich die Stromversorgungseinrichtung selbst und die zugeordnete elektronische Steuervorrichtung unverändert bleiben.

**Patentansprüche**

1.    Stromversorgungseinrichtung (13) mit wenigstens einem über ein Verbindungskabel (11) daran anschließbaren Elektrowerkzeug (10), wobei im Verbindungskabel (11) neben Stromversorgungsleitungen (21-23) Steuerleitungen (19,20) angeordnet sind, mit einer elektronischen Steuervorrichtung in der Stromversorgungseinrichtung zur Steuerung des Elektrowerkzeugs in Abhängigkeit wenigstens eines Parameters, und mit wenigstens einem als Betriebsschalter ausgebildeten Bedienungselement (15) am Elektrowerkzeug, durch den das Elektrowerkzeug von dort aus über die Steuerleitungen und die elektronische Steuervorrichtung in der Stromversorgungseinrichtung bedienbar ist, dadurch gekennzeichnet, daß als weiteres, über die Steuerleitungen (19,20) auf die Stromversorgungseinrichtung einwirkendes Bedienungselement (15) im Elektrowerkzeug ein insbesondere als Potentiometer ausgebildeter Drehzahlsteller (25) vorgesehen ist.

2. Stromversorgungseinrichtung nach Anspruch 1, dadurch gekennzeichnet, daß das mit dem Elektrowerkzeug (10) verbundene Verbindungskabel (11) in die Stromversorgungseinrichtung (13) einsteckbar ausgebildet ist.

3. Stromversorgungseinrichtung nach Anspruch 1 oder 2, dadurch gekennzeichnet, daß im Elektrowerkzeug (10) ein über die Steuerleitungen (19,20) auf die elektronische Steuervorrichtung (17) einwirkendes Überwachungsglied (26) vorgesehen ist.

4. Stromversorgungseinrichtung nach Anspruch 3, dadurch gekennzeichnet, daß das Überwachungsglied (26) als Temperaturmeßglied, insbesondere als PTC-Widerstand, ausgebildet ist.

5. Stromversorgungseinrichtung nach Anspruch 3 oder 4, dadurch gekennzeichnet, daß das Überwachungsglied als Spannungs- und/oder Strommeßglied ausgebildet ist.

6. Stromversorgungseinrichtung nach einem der Ansprüche 3 bis 5, dadurch gekennzeichnet, daß das Überwachungsglied als Drehmoment- und/oder Drehmeßzahlglied ausgebildet ist.

7. Stromversorgungseinrichtung nach einem der vorhergehenden Ansprüche, dadurch gekennzeichnet, daß die Bedienungselemente (24,25) und/oder Überwachungsglieder (26) als Widerstandsnetzwerk ausgebildet sind, das über zwei Steuerleitungen (19,20) mit der elektronischen Steuervorrichtung (17) verbunden ist.

8. Stromversorgungseinrichtung nach Anspruch 7, dadurch gekennzeichnet, daß das Widerstandsnetzwerk als Reihenschaltung ausgebildet ist.

9. Stromversorgungseinrichtung nach Anspruch 8, dadurch gekennzeichnet, daß die Reihenschaltung wenigstens einen PTC-Widerstand (26), ein Drehzahlpotentiometer (25) und den Betriebsschalter (24) aufweist.

10. Stromversorgungseinrichtung nach einem der Ansprüche 7 bis 9, dadurch gekennzeichnet, daß eine Steuerleitung (19) die Masseleitung ist und daß die andere Steuerleitung (20) mit einer Stromquelle (28) in der elektronischen Steuervorrichtung (17) zur Bildung einer widerstandsunhängigen Steuerspannung verbunden ist.

11. Stromversorgungseinrichtung nach Anspruch 10, dadurch gekennzeichnet, daß das Widerstandsnetzwerk mit Ausnahme des in Reihe dazu geschalteten Betriebsschalters (24) durch eine Z-Diode (27) überbrückt ist.

12. Stromversorgungseinrichtung nach einem der Ansprüche 7 bis 11, dadurch gekennzeichnet, daß die Steuerspannung oder die erfaßten Widerstandwerte Steuerbereichen (I-IV) zugeordnet sind, wobei wenigstens ein Proportional-Drehzahlbereich (11) und ab einem Grenzwert ein Abschaltbereich (IV,V) vorgesehen ist.

13. Stromversorgungseinrichtung nach Anspruch 12, dadurch gekennzeichnet, daß der Grenzwert nur durch Öffnen des Betriebsschalters (24) überwindbar ist.

14. Stromversorgungseinrichtung nach Anspruch 12 oder 13, dadurch gekennzeichnet, daß bei geschlossenem Betriebsschalter (24) ein durch die Z-Spannung der Z-Diode (27) bestimmter Minimal-Drehzahlgrenzwert vorgegeben ist.

15. Stromversorgungseinrichtung nach einem der Ansprüche 12 bis 14, dadurch gekennzeichnet, daß ein weiterer,
den Proportional-Drehzahlbereich (II) auf der dem Minimal-Drehzahlgrenzwert gegenüberliegenden Seite begrenzender Maximal-Drehzahlgrenzwert vorgesehen ist, ab dem sich ein Bereich (I) konstanter maximaler Drehzahl anschließt.

## Claims

1. Power supply equipment (13) with one or more electric tools (10) connectable thereto via a connecting cable (11) housing not only power supply leads (21-23), but also control leads (19, 20), with an electronic control device in the power supply equipment for the control of the electric tool subject to one or more parameters, and with one or more controls (15) designed as operating switches provided on the electric tool for the operation thereof via the control leads and the electronic control device in the power supply equipment, characterized in that, as a further control (15) in the electric tool acting via the control leads (19, 20) upon the power supply equipment, a speed regulating rheostat (25), in particular designed as a potentiometer, is provided.

2. Power supply equipment according to Claim 1, characterized in that the connecting cable (11) connected to the electric tool (10) is designed for plugging into the power supply equipment (13).

3. Power supply equipment according to Claim 1 or 2, characterized in that a monitoring element (26) acting via the control leads (19, 20) upon the electronic control device (17) is provided in the electric tool (10).

4. Power supply equipment according to Claim 3, characterized in that the monitoring element (26) is designed as a temperature-sensitive element, in particular as a PTC thermistor.

5. Power supply equipment according to Claim 3 or 4, characterized in that the monitoring element is designed as a voltmeter and/or amperemeter element.

6. Power supply equipment according to any of Claims 3 to 5, characterized in that the monitoring element is designed as a tachometer and/or torquemeter element.

7. Power supply equipment according to any of the preceding claims, characterized in that the controls (24, 25) and/or monitoring elements (26) are designed as a resistance system connected to the electronic control device (17) via two control leads (19, 20).

8. Power supply equipment according to Claim 7, characterized in that the resistance system is designed as a series circuit.

9. Power supply equipment according to Claim 8, characterized in that the series circuit comprises one or more PTC thermistors (26), a speed potentiometer (25) and the operating switch (24).

10. Power supply equipment according to any of Claims 7 to 9, characterized in that one of the control leads (19) is the earth lead and the other control lead (20) is connected to a power source (28) in the electronic control device (17) for the generation of a control voltage independent of resistance.

11. Power supply equipment according to Claim 10, characterized in that the resistance system, with the exception of the operating switch (24) connected in series therewith, is bridged by a Z-diode (27).

12. Power supply equipment according to any of Claims 7 to 11, characterized in that the control voltage or the measured resistance values are allocated to control ranges (I-IV), with one or more proportional speed ranges (II) and a cutout range (IV, V) from a limit value being provided.

13. Power supply equipment according to Claim 12, characterized in that the limit value can only be overridden by opening the operating switch (24).

14. Power supply equipment according to Claim 12 or 13, characterized in that a minimum speed limit value determined by the Z-voltage of the Z-diode (27) is preset in the closed state of the operating switch (24).

15. Power supply equipment according to any of Claims 12 to 14, characterized in that a further maximum speed limit value limiting the proportional speed range (II) at the end opposite the minimum speed limit value is provided, this limit value being followed by a constant maximum speed range (I).

**Revendications**

1. Dispositif d'alimentation en courant électrique (13) avec au moins un outil électrique (10) pouvant être raccordé à ce dispositif par un câble de liaison (11), des lignes de commande (19, 20) se trouvant dans le câble de liaison (11) à côté de lignes d'alimentation en courant (21 à 23), avec un dispositif de commande électronique dans le dispositif d'alimentation en courant électrique pour commander l'outil électrique en fonction d'au moins un paramètre et avec au moins un élément de commande (15), sur l'outil électrique, conçu comme un interrupteur de fonctionnement, par lequel l'outil électrique peut être commandé, à partir de celui-ci, par l'intermédiaire des lignes de commande et du dispositif de commande électronique placé dans le dispositif d'alimentation en courant électrique, caractérisé en ce qu'il est prévu, dans l'outil électrique, comme autre élément de commande (15) agissant, par l'intermédiaire des lignes de commande (19, 20), sur le dispositif d'alimentation en courant électrique, un variateur de vitesse (25), conçu notamment comme un potentiomètre.

2. Dispositif d'alimentation en courant électrique selon la revendication 1, caractérisé en ce que le câble de liaison (11) relié à l'outil électrique (10), peut être inséré dans le dispositif d'alimentation en courant électrique (13).

3. Dispositif d'alimentation en courant électrique selon la revendication 1 ou 2, caractérisé en ce qu'il est prévu dans l'outil électrique (10), un organe de contrôle (26) agissant sur le dispositif de commande électronique (17), par l'intermédiaire des lignes de commande (19, 20).

4. Dispositif d'alimentation en courant électrique selon la revendication 3, caractérisé en ce que l'organe de contrôle (26) est un organe de mesure de température, notamment une résistance à coefficient positif de température.

5. Dispositif d'alimentation en courant électrique selon la revendication 3 ou 4, caractérisé en ce que l'organe de contrôle est un organe de mesure de tension et/ou de mesure d'intensité.

6. Dispositif d'alimentation en courant électrique selon l'une des revendications 3 à 5, caractérisé en ce que l'organe de contrôle est un organe de mesure de couple de rotation et/ou de vitesse de rotation.

7. Dispositif d'alimentation en courant électrique selon l'une des revendications précédentes, caractérisé en ce que les éléments de commande (24, 25) et/ou les organes de contrôle (26) sont conçus sous la forme d'un réseau de résistances qui est relié au dispositif de commande électronique (17), par deux lignes de commande (19, 20).

8. Dispositif d'alimentation en courant électrique selon la revendication 7, caractérisé en ce que le réseau de résistance est un circuit en série.

9. Dispositif d'alimentation en courant électrique selon la revendication 8, caractérisé en ce que le circuit en série comporte au moins une résistance à coefficient positif de température (26), un potentiomètre de vitesse de rotation (25) et l'interrupteur de fonctionnement (24).

10. Dispositif d'alimentation en courant électrique selon l'une des revendications 7 à 9, caractérisé en ce qu'une ligne de commande (19) est la ligne de masse et en ce que l'autre ligne de commande (20) est reliée à une source de courant (28) dans le dispositif de commande électronique (17), pour former une tension de commande, fonction de la résistance.

11. Dispositif d'alimentation en courant électrique selon la revendication 10, caractérisé en ce que le réseau de résistances est ponté par une diode Z (27), à l'exception de l'interrupteur de fonctionnement (24) monté en série avec celui-ci.

12. Dispositif d'alimentation en courant électrique selon l'une des revendications 7 à 11, caractérisé en ce que la tension de commande ou les valeurs de résistance enregistrées sont associées à des plages de commande (I-IV), une plage de vitesse proportionnelle (II) et, à partir d'une valeur limite, une plage de coupure (IV, V) étant prévues.

13. Dispositif d'alimentation en courant électrique selon la revendication 12, caractérisé en ce que la valeur limite ne peut être surmontée que par ouverture de l'interrupteur de fonctionnement (24).

14. Dispositif d'alimentation en courant électrique selon la revendication 12 ou 13, caractérisé en ce qu'une valeur limite de vitesse minimum, déterminée par la tension Z de la diode Z (27), est donnée lorsque l'interrupteur de fonctionnement (24) est fermé.

15. Dispositif d'alimentation en courant électrique selon l'une des revendications 12 à 14, caractérisé en ce qu'il est prévu une autre valeur limite de vitesse maximum, limitant la plage de vitesse proportionnelle (II), sur le côté opposé à la valeur limite de vitesse minimum, à partir de laquelle fait suite une plage (I) de vitesse maximum constante.

# FIG. 1

# FIG. 3

FIG. 2

EP 0 298 278 B1